# EUROPEAN PATENT SPECIFICATION

(11) **EP 3 813 473 B1**
(45) Date of publication and mention of the grant of the patent: **25.01.2023**
(21) Application number: 18923198.8
(22) Date of filing: 17.12.2018
(51) Int. Cl.: H04M 11/00, H04L 43/10, F24F 11/58, H04L 67/141

(54) **COMMUNICATION METHOD, DEVICE, STORAGE MEDIUM, VOICE BOARD, DETECTION BOARD, AND AIR CONDITIONER**
KOMMUNIKATIONSVERFAHREN, VORRICHTUNG, SPEICHERMEDIUM, VOICE-BOARD, DETEKTIONSPLATTE UND KLIMAANLAGE
PROCÉDÉ DE COMMUNICATION, DISPOSITIF, SUPPORT D'INFORMATIONS, CARTE VOCALE, CARTE DE DÉTECTION ET CLIMATISEUR

(30) Priority: 19.06.2018 CN 201810628783
(43) Date of publication of application: 28.04.2021
(73) Proprietor: Gree Electric Appliances, Inc. of Zhuhai, Zhuhai, Guangdong 519070 (CN)
(72) Inventor: LIAO, Hufeng, Zhuhai, Guangdong 519070 (CN); WANG, Zi, Zhuhai, Guangdong 519070 (CN); ZHENG, Wencheng, Zhuhai, Guangdong 519070 (CN)
(74) Representative: V.O.
(86) International application number: PCT/CN2018/121412
(87) International publication number: WO 2019/242256

(56) References cited:
- CN-A- 105 188 159
- CN-A- 107 454 201
- CN-A- 108 834 222
- CN-B- 102 692 068
- US-A1- 2012 151 034
- US-A1- 2016 072 638
- US-A1- 2016 087 811

## Description

### Cross Reference to Related Applications

The present invention claims priority to Chinese Patent Application No. 201810628783.6, filed on June 19, 2018 and entitled "Communication Method and Apparatus, Storage Medium, Voice Board, Detection Board, and Air Conditioner".

### Technical Field

The present invention belongs to the technical field of air conditioners, in particular to a communication method and apparatus, a storage medium, a voice board, a detection board, and an air conditioner, and more particularly, to a local area network communication method for multiple Wi-Fi air conditioners based on an online voice air conditioner, an apparatus corresponding to this method, an air conditioner including the apparatus, a computer-readable storage medium storing instructions corresponding to this method, and an air conditioner capable of executing the instructions corresponding to this method.

### Background

Nowadays, some manufacturers have added an online voice function to an air conditioner. However, a voice component and an independent Wi-Fi component of the air conditioner for synchronizing a state with a server are relatively independent Wi-Fi components. There is no direct communication between the voice component and the independent Wi-Fi component. While some necessary parameters (such as information used for the voice component to access the server) are transmitted through a serial port of a main board of the air conditioner.

Specifically, the voice component communicates with the main board through a serial port. The Wi-Fi component further communicates with the main board through the serial port. There is no direct communication between the voice component and the Wi-Fi component, so that the necessary parameters are transmitted through the main board.

An access permit for the voice component to connect with the server is obtained through the Wi-Fi component. When the access permit is transmitted through the main board, the server is replaced, and a corresponding parameter format is changed, the main board needs to change a protocol, which cannot be used universally. The Wi-Fi component and a voice board transmit information through the main board, and there is no direct communication between the Wi-Fi component and the voice board. When the communication between the Wi-Fi component and the voice board is performed through the serial port, the Wi-Fi component first obtains the information, and transmits the information to the main board through the serial port according to the protocol, and then the main board transmits the information to the voice board according to the protocol.

US 2016/087811A1, US 2016/072638A1 and CN 102692068B provide related technical solutions; however, the above mentioned problem still remains unsolved.

### Summary

As to above-mentioned defects, at least some embodiments of the present invention provide a communication method and apparatus, a storage medium, a voice board, a detection board, and an air conditioner, so as at least to partially solve, a problem in the related art that since there is no direct communication between a voice component and a Wi-Fi component, information needs to be transmitted through a main board, thereby improving convenience of communication.

The present invention relates to a method and system according to the wording of claims 1 and 6 respectively. Further aspects and details of the invention are set out in the dependent claims.

The technical solutions of the present invention will be further described in detail below through the accompanying drawings and embodiments.

### Brief Description of the Drawings

Fig. 1 is a schematic flowchart of a communication method of a voice board according to an embodiment of the present invention.
Fig. 2 is a schematic flowchart of a voice communication component performing local area network maintenance according to an embodiment of the present invention.
Fig. 3 is a schematic flowchart of data transmission of a voice communication component according to an embodiment of the present invention.
Fig. 4 is a schematic flowchart of data update of a voice communication component according to an embodiment of the present invention.
Fig. 5 is a schematic structural block diagram of a communication apparatus of a voice board according to an embodiment of the present invention.
Fig. 6 is a schematic flowchart of a communication method of a detection board according to an embodiment of the present invention.
Fig. 7 is a schematic flowchart of an independent communication component performing local area network maintenance.
Fig. 8 is a schematic flowchart of data transmission of an independent communication component.
Fig. 9 is a schematic flowchart of data update of an independent communication component.
Fig. 10 is a schematic structural block diagram of a communication apparatus of a detection board according to an embodiment of the present invention.
Fig. 11 is a schematic flowchart of a local area network communication process an air conditioner according to an embodiment of the present invention.

With reference to the drawings, reference symbols in at least some embodiments of the present invention are as follows.

A reference symbol 102 refers to a first synchronization element.

A reference symbol 104 refers to a first communication element.

A reference symbol 202 refers to a second synchronization element.

A reference symbol 204 refers to a second communication element.

### Detailed Description

In order to make the objectives, technical solutions and advantages of the present invention clearer, the technical solutions of the present invention will be clearly and completely described herein below with specific embodiments of the present invention and the corresponding drawings.

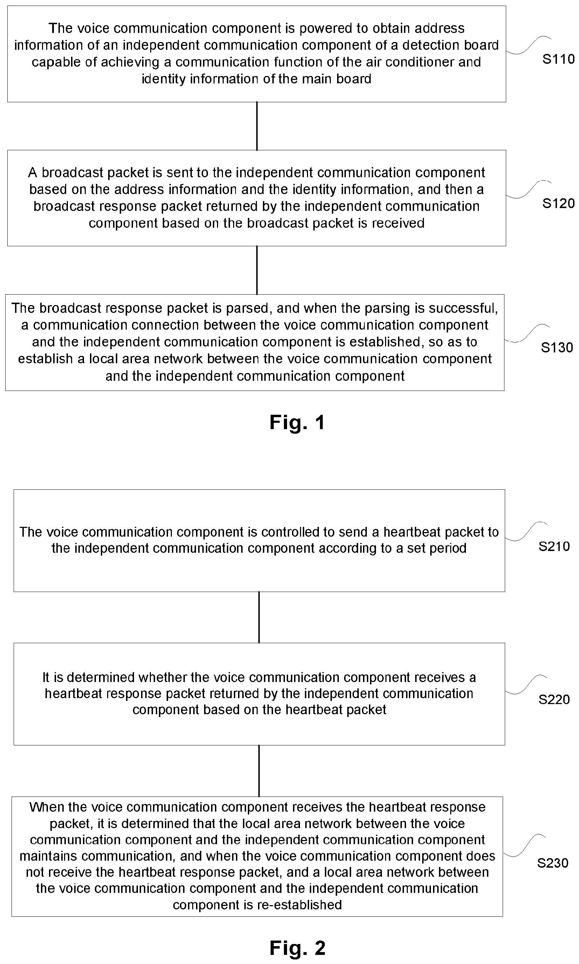

In some embodiments of the present invention, a communication method of a voice board is provided. Fig. 1 is a schematic flowchart of a communication method of a voice board according to an embodiment of the present invention. A voice communication component of the voice board is connected with a serial port of a main board of an air conditioner to achieve an online voice function of the air conditioner. For example, the serial port of the main board of the air conditioner is separately connected with the voice communication component of the voice board capable of achieving the online voice function of the air conditioner. As shown in Fig. 1, on one side of the voice communication component, the communication method of a voice board includes steps S110 to S130.

For example, the air conditioner has a Wi-Fi function and an online voice function. The single Wi-Fi function component of the air conditioner is relatively independent from a Wi-Fi component of the voice board, and is respectively connected with the serial port of the main board of the air conditioner and communicates with the serial port of the main board of the air conditioner. Local area communication keys of independent Wi-Fi (namely single Wi-Fi function component) and voice Wi-Fi of each air conditioner are different.

At step S110, the voice communication component is powered to obtain address information of an independent communication component of a detection board capable of achieving a communication function of the air conditioner and identity information of the main board. For example, after the voice communication component of the voice board capable of achieving the online voice function of the air conditioner is powered, the voice communication component obtains address information (for example, a MAC address) of an independent communication component of a detection board and identity information (for example, a device ID) of the main board to realize information synchronization of the voice communication component and the independent communication component before establishing local area network communication. For example, after powering the voice board, the MAC address of the independent Wi-Fi component (namely the single Wi-Fi function component of the air conditioner) and Devld of the main board are obtained from the main board of the air conditioner through serial communication.

Optionally, the independent communication component or the voice communication component includes one of a Wi-Fi component, a Bluetooth component, an NFC component, and an NB-IoT component.

Therefore, through various forms of communication components, it is conducive to improving the flexibility and convenience of communication, the range of applications is wide, and the user experience is good.

Optionally, the address information includes one of a MAC address and an IP address.

For example, the component establishes communication and remembers the IP address of the other party, so that subsequent content can be sent to the IP address.

Optionally, the identity information includes one of a device ID and a device identification code.

Therefore, through various forms of address information and identity information, address information, or identity information, it is conducive to enhance the flexibility and diversity of information synchronization between the voice communication component and the independent communication component and the establishment of the local area network, which is more convenient for users to use.

At step S120, a broadcast packet is sent to the independent communication component based on the address information and the identity information, and then a broadcast response packet returned by the independent communication component based on the broadcast packet is received. For example, the voice board Wi-Fi (namely, the Wi-Fi component of the voice board) sends a broadcast packet (such as an ipresearch broadcast pack), a top layer of the broadcast packet carries a key selection, the pack (such as the broadcast packet) carries the MAC address of the independent Wi-Fi component of the air conditioner, pack data (such as broadcast data in the broadcast packet) is encrypted with a key, which is obtained by a fixed algorithm using Devld.

The top layer of the broadcast packet carries a key selection mode. The broadcast packet carries address information of the independent communication component, and the address information is encrypted with a key based on the identity information.

Therefore, through broadcasting based on the address information of the independent communication component and the identity information of the main board of the air conditioner to achieve information synchronization and establish a local area network, the communication between the independent communication component and the voice communication component is safer, which is conducive to improving the convenience and reliability of using the air conditioner.

At step S130, the broadcast response packet is parsed. When the parsing is successful, a communication connection between the voice communication component and the independent communication component is established, so as to establish a local area network between the voice communication component and the independent communication component. For example, after the voice Wi-Fi component (namely the Wi-Fi component of the voice board) successfully decrypts the return packet (such as the ripresearch packet), a connection is established. And the IP of the independent Wi-Fi component (namely the single Wi-Fi function component of the air conditioner) is recorded.

For example, the local area network may be established between the voice Wi-Fi component and the Wi-Fi component dedicated to the air conditioner to facilitate the transmission of various types of information. The communication method is used for simplifying the program of the main board of the air conditioner and improving the universality of the main board of the air conditioner. When matching voice components of different manufacturers, as long as voice components of different manufacturers are executed according to this communication method, the voice components are compatible with the main board of the air conditioner.

Therefore, after the voice communication component is powered to obtain the address information of the independent communication component and the identity information of the main board of the air conditioner, the broadcast packet is sent to the independent communication component, and when the parsing of the received broadcast response packet is successful, the local area network between the voice communication component and the independent communication component is established, thereby realizing direct communication between the voice communication component and the independent communication component under the local area network, and greatly improving the convenience of communication.

In some optional implementation manners, the method further includes at least one of a process of recording the address information of the independent communication component after the parsing is successful, and a process of maintaining the local area network by the voice communication component after the establishment of the local area network.

In some optional examples, after the parsing is successful, the method further includes that: a communication IP address of the independent communication component which establishes a communication connection with the voice communication component is recorded.

In some optional examples, after establishing the local area network between the voice communication component and the independent communication component, the method further includes a process of maintaining the local area network by the voice communication component.

The specific process of maintaining the local area network by the voice communication component is further described below in conjunction with Fig. 2, which is a schematic flowchart of a voice communication component performing local area network maintenance according to an embodiment of the present invention.

At step S210, the voice communication component is controlled to send a heartbeat packet to the independent communication component according to a set period.

At step S220, it is determined whether the voice communication component receives a heartbeat response packet returned by the independent communication component based on the heartbeat packet.

At step S230, when the voice communication component receives the heartbeat response packet, it is determined that the local area network between the voice communication component and the independent communication component maintains communication. When the voice communication component does not receive the heartbeat response packet, it is determined that the local area network between the voice communication component and the independent communication component is interrupted, a local area network between the voice communication component and the independent communication component is re-established.

For example, the voice Wi-Fi board periodically sends a heartbeat packet (such as heartbt), the independent Wi-Fi component receives the heartbeat packet and returns a heartbeat response packet (such as rheartbt), and when the voice Wi-Fi board does not receive a heartbeat packet response, a local area network is re-established.

Therefore, after the local area network is established, the voice communication component sends the heartbeat packet to the independent communication component to determine that the local area network maintains communication when the voice communication component receives the heartbeat response packet returned by the independent communication component. However when the voice communication component does not receive the heartbeat response packet returned by the independent communication component, it is determined that the local area network is interrupted, the local area network needs to be re-established, so that the local area network remains unblocked, which is conducive to improve communication reliability.

In some optional implementation manners, after establishing the communication connection between the voice communication component and the independent communication component or determining that the local area network between the voice communication component and the independent communication component maintains communication, the method further includes at least one of a process of transmitting data by the voice communication component and a process of updating data by the voice communication component.

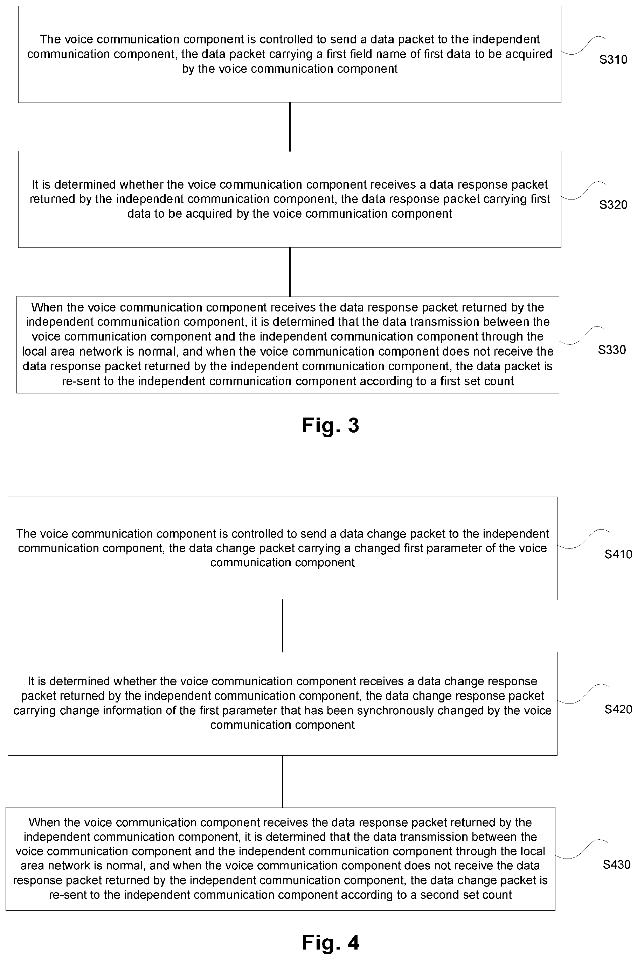

The specific process of transmitting data by the voice communication component is further described in conjunction with a schematic flowchart of data transmission of a voice communication component according to an embodiment of the present invention shown in FIG. 3.

At step S310, the voice communication component is controlled to send a data packet to the independent communication component. The data packet carries a first field name of first data to be acquired by the voice communication component.

At step S320, it is determined whether the voice communication component receives a data response packet returned by the independent communication component. The data response packet carries first data to be acquired by the voice communication component.

At step S330, when the voice communication component receives the data response packet returned by the independent communication component, it is determined that the data transmission between the voice communication component and the independent communication component through the local area network is normal. When the voice communication component does not receive the data response packet returned by the independent communication component, the data packet is re-sent to the independent communication component according to a first set count.

For example, the voice Wi-Fi component sends the data packet (such as a token packet), and the data packet (such as the token packet) contains a field name of data to be obtained, and the independent Wi-Fi component packages the corresponding data and returns a data response packet (such as an rtoken packet).

Therefore, after the voice communication component sends a data packet to the independent communication component under the local area network, it is determined that the data transmission is successful when the data response packet of the independent communication component is received, and the data packet is re-sent when the data response packet of the independent communication component is not received, which is conducive to improve the reliability of data transmission.

In some optional examples, the specific process of updating data by the voice communication component is further described in conjunction with a schematic flowchart of data update of a voice communication component according to an embodiment of the present invention shown in FIG. 4.

At step S410, the voice communication component is controlled to send a data change packet to the independent communication component. The data change packet carries a changed first parameter of the voice communication component.

At step S420, it is determined whether the voice communication component receives a data change response packet returned by the independent communication component. The data change response packet carries change information of the first parameter that has been synchronously changed by the voice communication component.

At step S430, when the voice communication component receives the data response packet returned by the independent communication component, it is determined that the data transmission between the voice communication component and the independent communication component through the local area network is normal. When the voice communication component does not receive the data response packet returned by the independent communication component, the data change packet is re-sent to the independent communication component according to a second set count.

For example, the voice Wi-Fi component sends a data change packet (such as a set packet) and packages the changed parameters to the opposite end. The independent Wi-Fi component returns a data change response packet (such as an rset packet). When the sender does not receive data, a specified count is re-sent.

Therefore, after the voice communication component sends a data change packet to the independent communication component under the local area network, it is determined that the data transmission is successful when the data change response packet of the independent communication component is received, and the data change packet is re-sent when the data change response packet of the independent communication component is not received. The communication is convenient and reliable when data is changed.

After a large number of tests and verifications, by using the technical solution of the present embodiment, through establishing the local area network between the voice Wi-Fi component and the Wi-Fi component dedicated to the air conditioner, the communication between the main board of the air conditioner and the voice board is simplified, and the program of the main board of the air conditioner is simplified.

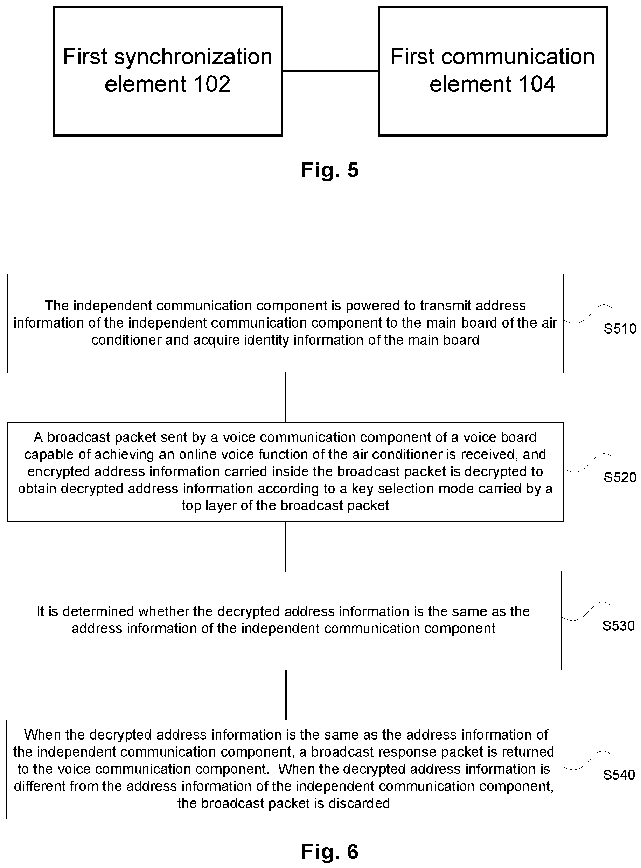

In some embodiments of the present invention, a communication apparatus of a voice board corresponding to the communication method of the voice board is further provided. Fig. 5 is a schematic structural block diagram of a communication apparatus of a voice board according to an embodiment of the present invention. In the communication apparatus of the voice board, a voice communication component of the voice board is connected with a serial port of a main board of an air conditioner to achieve an online voice function of the air conditioner. For example, the serial port of the main board of the air conditioner is separately connected with the voice communication component of the voice board capable of achieving the online voice function of the air conditioner. On one side of the voice communication component, the communication apparatus of the voice board includes: a first synchronization element 102 and a first communication element 104.

For example, the air conditioner has a Wi-Fi function and an online voice function. The single Wi-Fi function component of the air conditioner is relatively independent from a Wi-Fi component of the voice board, and is respectively connected with the serial port of the main board of the air conditioner and communicates with the main board of the air conditioner. Local area communication keys of independent Wi-Fi (namely single Wi-Fi function component) and voice Wi-Fi of each air conditioner are different.

In some optional examples, the first synchronization element 102 is configured to power the voice communication component to obtain address information of an independent communication component of a detection board capable of achieving a communication function of the air conditioner and identity information of the main board. For example, after the voice communication component of the voice board capable of achieving the online voice function of the air conditioner is powered, the voice communication component obtains address information (for example, a MAC address) of an independent communication component of a detection board capable of achieving a communication function of the air conditioner and identity information (for example, a device ID) of the main board to realize information synchronization of the voice communication component and the independent communication component before establishing local area network communication. For specific functions and processing of the first synchronization element 102, reference is made to step S110. For example, after powering the voice board, the MAC address of the independent Wi-Fi component (namely the single Wi-Fi function component of the air conditioner) and Devld of the main board are obtained from the main board of the air conditioner through serial communication.

Optionally, the independent communication component or the voice communication component includes one of a Wi-Fi component, a Bluetooth component, an NFC component, and an NB-IoT component.

Therefore, through various forms of communication components, it is conducive to improve the flexibility and convenience of communication, the range of applications is wide, and the user experience is positive.

Optionally, the address information includes one of a MAC address and an IP address.

Optionally, the identity information includes one of a device ID and a device identification code.

Therefore, through various forms of address information and identity information, or address information, or identity information, it is conducive to enhance the flexibility and diversity of information synchronization between the voice communication component and the independent communication component and the establishment of the local area network, which is more convenient for users to use.

In some optional examples, the first communication element 104 is configured to send a broadcast packet to the independent communication component based on the address information and the identity information, and then receive a broadcast response packet returned by the independent communication component based on the broadcast packet. For specific functions and processing of the first communication element 104, reference is made to step S120. For example, the voice board Wi-Fi (namely the Wi-Fi component of the voice board) sends a broadcast packet (such as an ipresearch broadcast pack), a top layer of the broadcast packet carries a key selection, the pack (such as the broadcast packet) carries the MAC address of the independent Wi-Fi component of the air conditioner, pack data (such as broadcast data in the broadcast packet) is encrypted with a key, which is obtained by a fixed algorithm using Devld.

The top layer of the broadcast packet carries a key selection mode. The broadcast packet carries address information of the independent communication component, and the address information is encrypted with a key based on the identity information.

Therefore, by broadcasting based on the address information of the independent communication component and the identity information of the main board of the air conditioner to achieve information synchronization and establish a local area network, the communication between the independent communication component and the voice communication component is safer, which is conducive to improve the convenience and reliability of using the air conditioner.

The first communication element 104 is further configured to parse the broadcast response packet. When the parsing is successful, a communication connection between the voice communication component and the independent communication component is established, so as to establish the local area network between the voice communication component and the independent communication component. For specific functions and processing of the first communication element 104, reference is also made to step S130. For example, after the voice Wi-Fi component (namely the Wi-Fi component of the voice board) successfully decrypts the return packet (such as the ripresearch packet), a connection is established. And the IP of the independent Wi-Fi component (namely the single Wi-Fi function component of the air conditioner) is recorded.

For example, the local area network is established between the voice Wi-Fi component and the Wi-Fi component dedicated to the air conditioner to facilitate the transmission of various types of information. The communication method is used for simplifying the program of the main board of the air conditioner and improving the universality of the main board of the air conditioner. When matching voice components of different manufacturers, as long as voice components of different manufacturers are executed according to the communication method, is the voice components are compatible with the main board of the air conditioner.

Therefore, after the voice communication component is powered to obtain the address information of the independent communication component and the identity information of the main board of the air conditioner, the broadcast packet is sent to the independent communication component. And when the parsing of the received broadcast response packet is successful, the local area network between the voice communication component and the independent communication component is established, thereby realizing direct communication between the voice communication component and the independent communication component under the local area network, and greatly improving the convenience of communication.

In some optional implementation manners, the method further includes at least one of a process of recording the address information of the independent communication component after the parsing is successful and a process of maintaining the local area network by the voice communication component after the establishment of the local area network.

In some optional examples, after the parsing of the first communication element 104 is successful, the first communication element 104 is further configured to record a communication IP address of the independent communication component which establishes a communication connection with the voice communication component.

In some optional examples, after the first communication element 104 establishes the local area network between the voice communication component and the independent communication component, the first communication element 104 is further configured to control the voice communication component to send a heartbeat packet to the independent communication component according to a set period. For specific functions and processing of the first communication element 104, reference is also made to step S210.

The first communication element 104 is further configured to determine whether the voice communication component receives a heartbeat response packet returned by the independent communication component based on the heartbeat packet. For specific functions and processing of the first communication element 104, reference is also made to step S220.

The first communication element 104 is further configured to determine, when the voice communication component receives the heartbeat response packet, that the local area network between the voice communication component and the independent communication component maintains communication. When the voice communication component does not receive the heartbeat response packet, it is determined that the local area network between the voice communication component and the independent communication component is interrupted, the local area network between the voice communication component and the independent communication component is re-established. For specific functions and processing of the first communication element 104, reference is also made to step S230.

For example, the voice Wi-Fi board periodically sends the heartbeat packet (such as heartbt), the independent Wi-Fi component receives the heartbeat packet and returns a heartbeat response packet (such as rheartbt), and when the voice Wi-Fi board does not receive the heartbeat packet response, the local area network is re-established.

Therefore, after the local area network is established, the voice communication component sends the heartbeat packet to the independent communication component to determine that the local area network maintains communication when the voice communication component receives the heartbeat response packet returned by the independent communication component. However when the voice communication component does not receive the heartbeat response packet returned by the independent communication component, it is determined that the local area network is interrupted, the local area network needs to be re-established, so that the local area network remains unblocked, which is conducive to improve communication reliability.

In some optional implementation manners, after the first communication element 104 establishes the communication connection between the voice communication component and the independent communication component or determining that the local area network between the voice communication component and the independent communication component maintains communication, at least one of a process of transmitting data by the voice communication component and a process of updating data by the voice communication component is further included.

In some optional examples, the first communication element 104 performs the process of transmitting data by the voice communication component.

The first communication element 104 is further configured to control the voice communication component to send a data packet to the independent communication component. The data packet carries a first field name of first data to be acquired by the voice communication component. For specific functions and processing of the first communication element 104, reference is also made to step S310.

The first communication element 104 is further configured to determine whether the voice communication component receives a data response packet returned by the independent communication component. The data response packet carries first data to be acquired by the voice communication component. For specific functions and processing of the first communication element 104, reference is also made to step S320.

The first communication element 104 is further configured to determine, when the voice communication component receives the data response packet returned by the independent communication component, that the data transmission between the voice communication component and the independent communication component through the local area network is normal. When the voice communication component does not receive the data response packet returned by the independent communication component, the data packet is re-sent to the independent communication component according to a first set count. For specific functions and processing of the first communication element 104, reference is also made to step S330.

For example, the voice Wi-Fi component sends a data packet (such as a token packet), and the data packet (such as the token packet) contains a field name of data to be obtained, and the independent Wi-Fi component packages the corresponding data and returns a data response packet (such as an rtoken packet).

Therefore, after the voice communication component sends the data packet to the independent communication component under the local area network, it is determined that the data transmission is successful when the data response packet of the independent communication component is received, and the data packet is re-sent when the data response packet of the independent communication component is not received, which is conducive to improve the reliability of data transmission.

In some optional examples, the first communication element 104 performs the process of updating data by the voice communication component.

The first communication element 104 is further configured to control the voice communication component to send a data change packet to the independent communication component. The data change packet carries a changed first parameter of the voice communication component. For specific functions and processing of the first communication element 104, reference is also made to step S410.

The first communication element 104 is further configured to determine whether the voice communication component receives a data change response packet returned by the independent communication component. The data change response packet carries change information of the first parameter that has been synchronously changed by the voice communication component. For specific functions and processing of the first communication element 104, reference is also made to step S420.

The first communication element 104 is further configured to determine, when the voice communication component receives the data response packet returned by the independent communication component, that the data transmission between the voice communication component and the independent communication component through the local area network is normal. When the voice communication component does not receive the data response packet returned by the independent communication component, the data change packet is re-sent to the independent communication component according to a second set count. For specific functions and processing of the first communication element 104, reference is also made to step S430.

For example, the voice Wi-Fi component sends the data change packet (such as a set packet) and packages the changed parameters to the opposite end. The independent Wi-Fi component returns the data change response packet (such as an rset packet). When the sender does not receive data, a specified count is re-sent.

Therefore, after the voice communication component sends the data change packet to the independent communication component under the local area network, it is determined that the data transmission is successful when the data change response packet of the independent communication component is received, and the data change packet is re-sent when the data change response packet of the independent communication component is not received. The communication is convenient and reliable when data is changed.

Since the processing and functions implemented by the apparatus of the present embodiment basically correspond to the foregoing embodiments, principles, and examples of the method shown in Fig. 1 to Fig. 4, the description of the present embodiment is not exhaustive, reference may be made to relevant descriptions in the foregoing embodiments, and the description will not be repeated here.

After a large number of tests and verifications, by using the technical solution of the present invention, by establishing a local area network between the voice Wi-Fi component and the Wi-Fi component dedicated to the air conditioner, the generalization of the main board (i.e., the main board of the air conditioner) is improved, and the universality of the main board of the air conditioner is improved.

In some embodiments of the present invention, a voice board corresponding to the communication apparatus of the voice board is also provided. The voice board includes the communication apparatus of the voice board described above.

Since the processing and functions implemented by the voice board of the present embodiment basically correspond to the foregoing embodiments, principles, and examples of the apparatus shown in Fig. 5, the description of the present embodiment is not exhaustive, reference is made to relevant descriptions in the foregoing embodiments, and the description will not be repeated here.

After a large number of tests and verifications, by using the technical solution of the present invention, through establishing a local area network between the voice Wi-Fi component and the Wi-Fi component dedicated to the air conditioner, a convenient and quick communication mode between the voice board Wi-Fi and the independent Wi-Fi component of the air conditioner is provided.

In some embodiments of the present invention, a communication method of a detection board is provided. Fig. 6 is a schematic flowchart of a communication method of a detection board according to an embodiment of the present invention. An independent communication component of the detection board is connected with a serial port of a main board of an air conditioner to achieve a communication function of the air conditioner. For example, the serial port of the main board of the air conditioner is also separately connected with the independent communication component capable of achieving the communication function of the air conditioner. In other words, the serial port of the main board of the air conditioner is respectively connected with the independent communication component capable of achieving the communication function of the air conditioner, and separately connected with the voice communication component of the voice board capable of achieving the online voice function of the air conditioner. Or, the independent communication component capable of achieving the communication function of the air conditioner and the voice communication component of the voice board capable of achieving the online voice function of the air conditioner are respectively connected with the serial port of the main board of the air conditioner. For another example, the air conditioner has a communication function and an online voice function. The independent communication component of the air conditioner and the voice communication component of the voice board are relatively independently arranged, are respectively connected with the serial port of the main board of the air conditioner and communicate with the main board. On one side of the voice communication component, the communication method of a detection board includes steps S510 to S540.

For example, the air conditioner has a Wi-Fi function and an online voice function. The single Wi-Fi function component of the air conditioner is relatively independent from a Wi-Fi component of the voice board, and is respectively connected with the serial port of the main board of the air conditioner and communicates with the main board of the air conditioner. Local area communication keys of independent Wi-Fi (namely single Wi-Fi function component) and voice Wi-Fi of each air conditioner are different.

At step S510, the independent communication component is powered to transmit address information of the independent communication component to the main board of the air conditioner and acquire identity information of the main board. For example, the independent communication component (after the independent communication component of the detection board capable of achieving the communication function of the air conditioner is powered, through the serial port of the main board of the air conditioner) is controlled to transmit address information of the independent communication component to the main board of the air conditioner, and acquire identity information of the main board. Therefore, when the address information and the identity information are obtained through the serial port of the main board of the air conditioner after the voice communication component of the voice board is powered, and the address information and the identity information are obtained from the serial port of the main board.

For example, the independent Wi-Fi component (namely a single Wi-Fi function component with a single Wi-Fi function for the air conditioner) transmits the MAC (Media Access Control or Medium Access Control) address of the independent Wi-Fi component to the main board of the air conditioner through serial communication after powering, and obtains Devld of the main board of the air conditioner (for example, an identification code such as a device ID of the main board of the air conditioner).

Optionally, the independent communication component or the voice communication component includes one of a Wi-Fi component, a Bluetooth component, an NFC component, and an NB-IoT component.

Therefore, through various forms of communication components, it is conducive to improve the flexibility and convenience of communication, the range of applications is wide, and the user experience is positive.

Optionally, the address information includes one of a MAC address and an IP address.

Optionally, the identity information includes one of a device ID and a device identification code.

Therefore, through various forms of address information and identity information, or address information, or identity information, it is conducive to enhance the flexibility and diversity of information synchronization between the voice communication component and the independent communication component and the establishment of a local area network, which is more convenient for users to use.

At step S520, a broadcast packet sent by a voice communication component of a voice board capable of achieving an online voice function of the air conditioner is received, and encrypted address information carried in the broadcast packet is decrypted to obtain decrypted address information according to a key selection mode carried in a top layer of the broadcast packet. For example, the independent Wi-Fi component (namely the single Wi-Fi function component of the air conditioner) receives a broadcast packet, calculates a key by performing a fixed algorithm on Devld through a specified key selection mode, and decrypts the pack.

The top layer of the broadcast packet carries a key selection mode. The broadcast packet carries address information of the independent communication component, and the address information is encrypted with a key based on the identity information.

Therefore, through broadcasting based on the address information of the independent communication component and the identity information of the main board of the air conditioner to achieve information synchronization and establish a local area network, the communication between the independent communication component and the voice communication component is safer, which is conducive to improve the convenience and reliability of using the air conditioner.

At step S530, it is determined whether the decrypted address information is the same as the address information of the independent communication component.

At step S540, when the decrypted address information is the same as the address information of the independent communication component, a broadcast response packet is returned to the voice communication component. When the decrypted address information is different from the address information of the independent communication component, the broadcast packet is discarded. For example, the MAC in the pack is compared with the MAC in the independent Wi-Fi component (namely the single Wi-Fi function component of the air conditioner). When the MAC in the pack is different from the MAC in the independent Wi-Fi component, the broadcast packet is discarded without any response. When the MAC in the pack is the same as the MAC in the independent Wi-Fi component, the IP of voice Wi-Fi is recorded, and the broadcast response packet (such as ripresearch packet) is returned.

For example, the local area network is established between the voice Wi-Fi component and the Wi-Fi component dedicated to the air conditioner to facilitate the transmission of various types of information. The communication method is used for simplifying the program of the main board of the air conditioner and improving the universality of the main board of the air conditioner. When matching voice components of different manufacturers, as long as voice components of different manufacturers are executed according to the communication method, the voice components are compatible with the main board of the air conditioner.

Therefore, through transmitting the address information of the independent communication component to the main board of the air conditioner after the independent communication component is powered, and acquiring the identity information of the main board of the air conditioner, the information of the independent communication component and the voice communication component is synchronized to receive the broadcast packet sent by the voice communication component. After decrypting the broadcast packet, when the address information carried in the broadcast packet is the same as the address information of the independent communication component, the broadcast response packet will be returned to the voice communication component, and when the address information carried in the broadcast packet is different from the address information of the independent communication component, the broadcast packet will be discarded, which is beneficial to improve the reliability and security of local area network establishment.

In some optional implementation manners, the method further includes at least one of a process of recording the address information carried in the broadcast packet when the address information carried in the broadcast packet is the same as the address information of the independent communication component after decryption, and a process of maintaining the local area network by the independent communication component after returning the broadcast response packet to the voice communication component.

In some optional examples, after the decrypted address information is the same as the address information of the independent communication component, the method further includes that: a communication IP address sent by the voice communication component which sends the broadcast packet to the independent communication component is recorded.

In some optional examples, after returning the broadcast response packet to the voice communication component, the method further includes: a process of maintaining the local area network by the independent communication component.

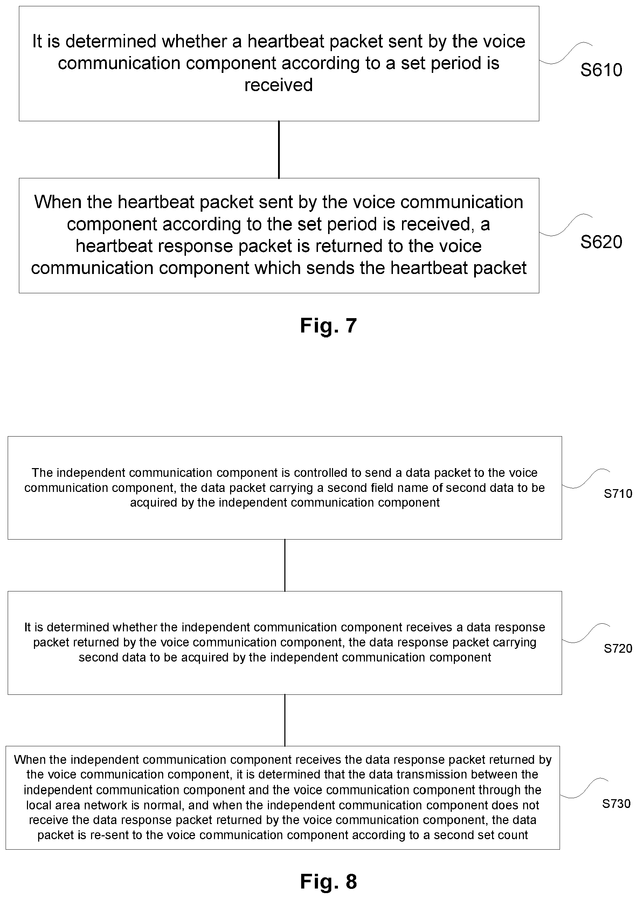

The specific process of maintaining the local area network by the independent communication component is further described below in conjunction with Fig. 7, which is a schematic flowchart of an independent communication component performing local area network maintenance according to an embodiment of the present invention.

At step S610, it is determined whether a heartbeat packet sent by the voice communication component according to a set period is received.

At step S620, when the heartbeat packet sent by the voice communication component according to the set period is received, a heartbeat response packet is returned to the voice communication component which sends the heartbeat packet.

Therefore, after returning the broadcast response packet to the voice communication component through the independent communication component and establishing the local area network with the voice communication component, the heartbeat packet sent by the voice communication component is received, and then the heartbeat response packet is returned to the voice communication component to determine that the local area network maintains communication, which is beneficial to improve the reliability of communication.

In some optional implementation manners, after returning the broadcast response packet to the voice communication component or returning the heartbeat response packet to the voice communication component which sends the heartbeat packet, the method further includes at least one of a process of transmitting data by the independent communication component and a process of updating data by the independent communication component.

In some optional examples, the specific process of transmitting data by the independent communication component is further described in conjunction with a schematic flowchart of data transmission of an independent communication component according to an embodiment of the present invention shown in FIG. 8.

At step S710, the independent communication component is controlled to send a data packet to the voice communication component. The data packet carries a second field name of second data to be acquired by the independent communication component.

At step S720, it is determined whether the independent communication component receives a data response packet returned by the voice communication component. The data response packet carries second data to be acquired by the independent communication component.

At step S730, when the independent communication component receives the data response packet returned by the voice communication component, it is determined that the data transmission between the independent communication component and the voice communication component through the local area network is normal. When the independent communication component does not receive the data response packet returned by the voice communication component, the data packet is re-sent to the voice communication component according to a second set count.

For example, the independent Wi-Fi component sends the data packet (such as a token packet), and the data packet (such as the token packet) contains the field name of data to be obtained, and the voice Wi-Fi component packages the corresponding data and returns the data response packet (such as an rtoken packet).

Therefore, through controlling the independent communication component to receive the data packet sent by the voice communication component under the local area network and returning the data response packet, data transmission between the voice communication component and the independent communication component is achieved through the local area network, and the convenience and reliability of data transmission are high.

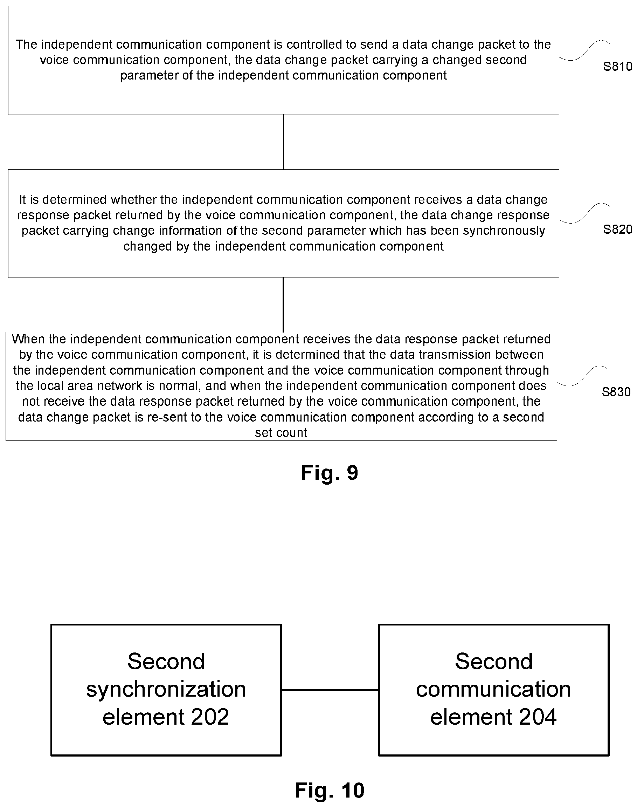

In some optional examples, the specific process of updating data by the independent communication component is further described in conjunction with a schematic flowchart of data update of an independent communication component as shown in Fig. 9.

At step S810, the independent communication component is controlled to send a data change packet to the voice communication component. The data change packet carries a changed second parameter of the independent communication component.

At step S820, it is determined whether the independent communication component receives a data change response packet returned by the voice communication component. The data change response packet carries change information of the second parameter that has been synchronously changed by the independent communication component.

At step S830, when the independent communication component receives the data response packet returned by the voice communication component, it is determined that the data transmission between the independent communication component and the voice communication component through the local area network is normal. When the independent communication component does not receive the data response packet returned by the voice communication component, the data change packet is re-sent to the voice communication component according to a second set count.

For example, the independent Wi-Fi component sends the data change packet (such as a set packet) and packages the changed parameters to the opposite end. The voice Wi-Fi component returns the data change response packet (such as an rset packet). When the sender does not receive data, a specified count is re-sent.

Therefore, through controlling the independent communication component to receive the data change packet sent by the voice communication component under the local area network and returning the data change response packet, data change between the voice communication component and the independent communication component is achieved through the local area network, and the convenience and reliability of data change are high.

Since the processing and functions implemented by the communication method of the detection board of the present embodiment basically respond to or interact with the foregoing embodiments, principles, and examples of the communication method of a voice board shown in Fig. 1 to Fig. 4, the description of the present embodiment is not exhaustive, reference is made to relevant descriptions in the foregoing embodiments, and the description will not be repeated here.

After a large number of tests and verifications, by using the technical solution of the present embodiment, through establishing the local area network between the voice Wi-Fi component and the Wi-Fi component dedicated to the air conditioner, the communication between the main board of the air conditioner and the detection board is simplified, and the program of the main board of the air conditioner is simplified.

In some embodiments of the present invention, a communication apparatus of a detection board corresponding to the communication method of the detection board is also provided. Fig. 10 is a schematic structural block diagram of a communication apparatus of a detection board according to an embodiment of the present invention. An independent communication component of the detection board is connected with a serial port of a main board of an air conditioner to achieve a communication function of the air conditioner. For example, the serial port of the main board of the air conditioner is also separately connected with the independent communication component capable of achieving the communication function of the air conditioner. In other words, the serial port of the main board of the air conditioner is respectively connected with the independent communication component capable of achieving the communication function of the air conditioner, and separately connected with the voice communication component of the voice board capable of achieving the online voice function of the air conditioner. Or, the independent communication component of the air conditioner and the voice communication component of the voice board capable of achieving the online voice function of the air conditioner are respectively connected with the serial port of the main board of the air conditioner. For another example, the air conditioner has a communication function and an online voice function. The independent communication component of the air conditioner and the voice communication component of the voice board are relatively independently arranged, are respectively connected with the serial port of the main board of the air conditioner and communicates with the main board. On one side of the voice communication component, the communication apparatus of the detection board includes: a second synchronization element 202 and a second communication element 204.

For example, the air conditioner has a Wi-Fi function and an online voice function. The single Wi-Fi function component of the air conditioner is relatively independent from a Wi-Fi component of the voice board, and is respectively connected with the serial port of the main board of the air conditioner and communicates with the main board of the air conditioner. Local area communication keys of independent Wi-Fi (namely single Wi-Fi function component) and voice Wi-Fi of each air conditioner are different.

In some optional examples, the second synchronization element 202 is configured to power the independent communication component to transmit address information of the independent communication component to the main board of the air conditioner and acquire identity information of the main board. For example, the independent communication component (after the independent communication component of the detection board capable of achieving the communication function of the air conditioner is powered, through the serial port of the main board of the air conditioner) is controlled to transmit address information of the independent communication component to the main board of the air conditioner and acquire identity information of the main board. Therefore, when the address information and the identity information are obtained through the serial port of the main board of the air conditioner after the voice communication component of the voice board capable of achieving the online voice function of the air conditioner is powered, and the address information and the identity information are obtained from the serial port of the main board. For specific functions and processing of the second synchronization element 202, reference is made to step S510.

For example, the independent Wi-Fi component (namely a single Wi-Fi function component with a single Wi-Fi function for the air conditioner) transmits the MAC (Media Access Control or Medium Access Control) address of the independent Wi-Fi component to the main board of the air conditioner through serial communication after powering, and obtains Devld of the main board of the air conditioner (for example, an identification code such as a device ID of the main board of the air conditioner).

Optionally, the independent communication component or the voice communication component includes one of a Wi-Fi component, a Bluetooth component, an NFC component, and an NB-IoT component.

Therefore, through various forms of communication components, it is conducive to improve the flexibility and convenience of communication, the range of applications is wide, and the user experience is positive.

Optionally, the address information includes one of a MAC address and an IP address.

Optionally, the identity information includes one of a device ID and a device identification code.

Therefore, through various forms of address information and identity information, or address information, or identity information, it is conducive to enhance the flexibility and diversity of information synchronization between the voice communication component and the independent communication component and the establishment of the local area network, which is more convenient for users to use.

In some optional examples, the second communication element 204 is configured to receive a broadcast packet sent by a voice communication component of a voice board capable of achieving an online voice function of the air conditioner, and decrypt encrypted address information carried in the broadcast packet to obtain decrypted address information according to a key selection mode carried in a top layer of the broadcast packet. For specific functions and processing of the second synchronization element 202, reference is made to step S520. For example, the independent Wi-Fi component (namely the single Wi-Fi function component of the air conditioner) receives a broadcast packet, calculates a key by performing a fixed algorithm on Devld through a specified key selection mode, and decrypts the pack.

The top layer of the broadcast packet carries a key selection mode. The broadcast packet carries address information of the independent communication component, and the address information is encrypted with a key based on the identity information.

Therefore, through broadcasting based on the address information of the independent communication component and the identity information of the main board of the air conditioner to achieve information synchronization and establish the local area network, the communication between the independent communication component and the voice communication component is safer, which is conducive to improve the convenience and reliability of using the air conditioner.

In some optional examples, the second communication element 204 is further configured to determine whether the decrypted address information is the same as the address information of the independent communication component. For specific functions and processing of the second synchronization element 202, reference is also made to step S530.

In some optional examples, the second communication element 204 is further configured to return, when the decrypted address information is the same as the address information of the independent communication component, a broadcast response packet to the voice communication component. When the decrypted address information is different from the address information of the independent communication component, the broadcast packet is discarded. For specific functions and processing of the second synchronization element 202, reference is also made to step S540. For example, the MAC in the pack is compared with the MAC in the independent Wi-Fi component (namely the single Wi-Fi function component of the air conditioner). When the MAC in the pack is different from the MAC in the independent Wi-Fi component, the broadcast packet is discarded without any response. When the MAC in the pack is the same as the MAC in the independent Wi-Fi component, the IP of voice Wi-Fi is recorded, and the broadcast response packet (such as ripresearch packet) is returned.

For example, the local area network is established between the voice Wi-Fi component and the Wi-Fi component dedicated to the air conditioner to facilitate the transmission of various types of information. The communication method is used for simplifying the program of the main board of the air conditioner and improving the universality of the main board of the air conditioner. When matching voice components of different manufacturers, as long as voice components of different manufacturers are executed according to the communication method, the voice components are compatible with the main board of the air conditioner.

Therefore, through transmitting the address information of the independent communication component to the main board of the air conditioner after the independent communication component is powered, and acquiring the identity information of the main board of the air conditioner, the information of the independent communication component and the voice communication component is synchronized to receive the broadcast packet sent by the voice communication component. After decrypting the broadcast packet, when the address information carried in the broadcast packet is the same as the address information of the independent communication component, the broadcast response packet will be returned to the voice communication component, and when the address information carried in the broadcast packet is different from the address information of the independent communication component, the broadcast packet will be discarded, which is beneficial to improve the reliability and security of local area network establishment.

In some optional implementation manners, the method further includes at least one of a process of recording the address information carried in the broadcast packet when the address information carried in the broadcast packet is the same as the address information of the independent communication component after decryption, and a process of maintaining the local area network by the independent communication component after returning the broadcast response packet to the voice communication component.

In some optional examples, after the decrypted address information decrypted by the second communication element 204 is the same as the address information of the independent communication component, the second communication element 204 is further configured to record a communication IP address sent by the voice communication component which sends the broadcast packet to the independent communication component.

In some optional examples, after the second communication element 204 returns a broadcast response packet to the voice communication component, the second communication element 204 is further configured to determine whether a heartbeat packet sent by the voice communication component according to a set period is received. For specific functions and processing of the second synchronization element 202, reference is also made to step S610.

The second communication element 204 is further configured to return, when the heartbeat packet sent by the voice communication component according to the set period is received, a heartbeat response packet to the voice communication component which sends the heartbeat packet. For specific functions and processing of the second synchronization element 202, reference is also made to step S620.

Therefore, after returning the broadcast response packet to the voice communication component through the independent communication component and establishing the local area network with the voice communication component, the heartbeat packet sent by the voice communication component is received, and then the heartbeat response packet is returned to the voice communication component to determine that the local area network maintains communication, which is beneficial to improve the reliability of communication.

In some optional implementation manners, after the second communication element 204 returns the broadcast response packet to the voice communication component or returns the heartbeat response packet to the voice communication component which sends the heartbeat packet, at least one of a process of transmitting data by the independent communication component and a process of updating data by the independent communication component is included.

In some optional examples, the second communication element 204 performs the process of transmitting data by the independent communication component.

The second communication element 204 is further configured to control the independent communication component to send a data packet to the voice communication component. The data packet carries a second field name of second data to be acquired by the independent communication component. For specific functions and processing of the second synchronization element 202, reference is also made to step S710.

The second communication element 204 is further configured to determine whether the independent communication component receives a data response packet returned by the voice communication component. The data response packet carries second data to be acquired by the independent communication component. For specific functions and processing of the second synchronization element 202, reference is also made to step S720.

The second communication element 204 is further configured to determine, when the independent communication component receives the data response packet returned by the voice communication component, that the data transmission between the independent communication component and the voice communication component through the local area network is normal. When the independent communication component does not receive the data response packet returned by the voice communication component, the data packet is re-sent to the voice communication component according to a second set count. For specific functions and processing of the second synchronization element 202, reference is also made to step S730.

For example, the independent Wi-Fi component sends a data packet (such as a token packet), and the data packet (such as the token packet) contains a field name of data to be obtained, and the voice Wi-Fi component packages the corresponding data and returns a data response packet (such as an rtoken packet).

Therefore, through controlling the independent communication component to receive the data packet sent by the voice communication component under the local area network and returning the data response packet, data transmission between the voice communication component and the independent communication component is achieved through the local area network, and the convenience and reliability of data transmission are high.

In some optional examples, the second communication element 204 performs the process of updating data by the independent communication component.

The second communication element 204 is further configured to control the independent communication component to send a data change packet to the voice communication component. The data change packet carries a changed second parameter of the independent communication component. For specific functions and processing of the second synchronization element 202, reference is also made to step S810.

The second communication element 204 may be further configured to determine whether the independent communication component receives a data change response packet returned by the voice communication component. The data change response packet carries change information of the second parameter which has been synchronously changed by the independent communication component. For specific functions and processing of the second synchronization element 202, reference is also made to step S820.

The second communication element 204 is further configured to determine, when the independent communication component receives the data response packet returned by the voice communication component, that the data transmission between the independent communication component and the voice communication component through the local area network is normal. When the independent communication component does not receive the data response packet returned by the voice communication component, the data change packet is re-sent to the voice communication component according to a second set count. For specific functions and processing of the second synchronization element 202, reference is also made to step S830.

For example, the independent Wi-Fi component sends the data change packet (such as a set packet) and packages the changed parameters to the opposite end. The voice Wi-Fi component returns the data change response packet (such as an rset packet). When the sender does not receive data, a specified count is re-sent.

Therefore, through controlling the independent communication component to receive the data change packet sent by the voice communication component under the local area network and returning the data change response packet, data change between the voice communication component and the independent communication component is achieved through the local area network, and the convenience and reliability of data change are high.

Since the processing and functions implemented by the apparatus of the present embodiment basically correspond to the foregoing embodiments, principles, and examples of the method shown in Fig. 6 to Fig. 9, the description of the present embodiment is not exhaustive, reference is made to relevant descriptions in the foregoing embodiments, and the description will not be repeated here.

After a large number of tests and verifications, by using the technical solution of the present embodiment, through establishing a local area network between the voice Wi-Fi component and the Wi-Fi component dedicated to the air conditioner, the generalization of the main board (i.e., the main board of the air conditioner) is improved, and the universality of the main board of the air conditioner is improved.

In some embodiments of the present invention, a detection board corresponding to the communication apparatus of the detection board is also provided. The detection board includes the communication apparatus of the detection board described above.

Since the processing and functions implemented by the detection board of the present embodiment basically correspond to the foregoing embodiments, principles, and examples of the apparatus shown in Fig. 10, the description of the present embodiment is not exhaustive, reference is made to relevant descriptions in the foregoing embodiments, and the description will not be repeated here.

After a large number of tests and verifications, by using the technical solution of the present invention, through establishing the local area network between the voice Wi-Fi component and the Wi-Fi component dedicated to the air conditioner, a convenient and quick communication mode between the detection board Wi-Fi and the independent Wi-Fi component of the air conditioner is provided.

In some embodiments of the present invention, an air conditioner corresponding to the detection board is also provided. The air conditioner achieves an online voice function through the voice board described above. Or, the air conditioner includes at least one of the voice board described above and the communication apparatus of a detection board described above.

In some optional implementation manners, in order to simplify the communication between the main board of the air conditioner and the voice board, and to improve the generalization of the main board (namely the main board of the air conditioner), a convenient and quick communication mode between the voice board Wi-Fi and the independent Wi-Fi component of the air conditioner is provided. The solution of the present invention provides a local area network communication method based on an online voice air conditioner and multi-Wi-Fi air conditioner. The communication method is used for simplifying the program of the main board of the air conditioner and improving the universality of the main board of the air conditioner. When matching voice components of different manufacturers, as long as voice components of different manufacturers are executed according to the communication method, the voice components are compatible with the main board of the air conditioner. Different parameters required to connect with different servers are also added to this communication method.

Optionally, in the solution of the present invention, the local area network is established between the voice Wi-Fi component and the Wi-Fi component dedicated to the air conditioner to facilitate the transmission of various types of information. Moreover, the local area network communication method based on the online voice air conditioner and multi-Wi-Fi air conditioner of the present invention has the following features.
(1) The air conditioner has a Wi-Fi function and an online voice function.
(2) The single Wi-Fi function component of the air conditioner is relatively independent from a Wi-Fi component of the voice board, and is respectively connected with the serial port of the main board of the air conditioner and communicates with the main board of the air conditioner.
(3) Local area communication keys of independent Wi-Fi (namely single Wi-Fi function component) and voice Wi-Fi of each air conditioner are different.

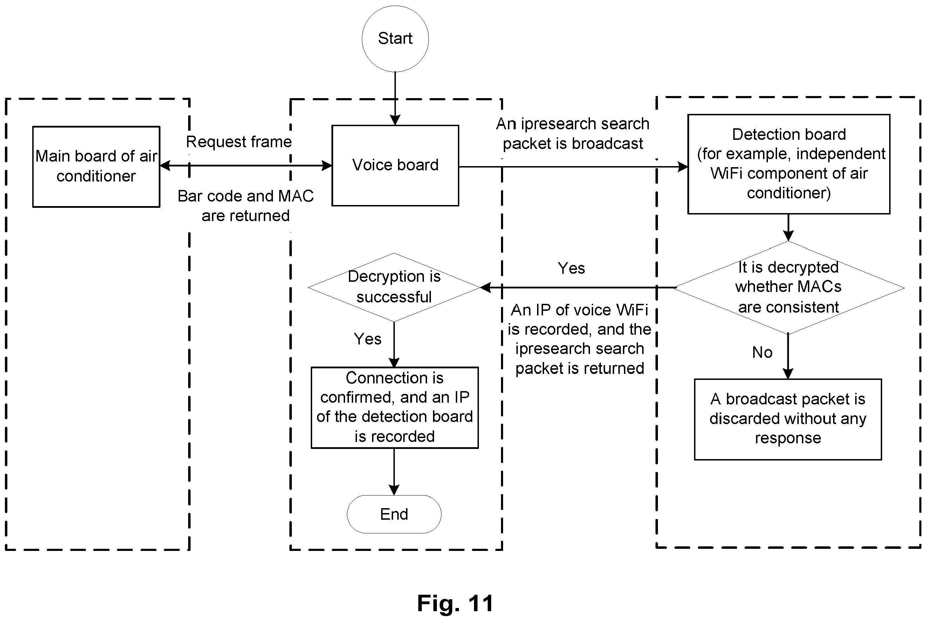

In some optional examples, as shown in Fig. 11, in the solution of the present invention, the steps of establishing local area communication are as follows:
At step 1, early information synchronization of local area communication is established. The relevant content is as follows.

The independent Wi-Fi component (namely a single Wi-Fi function component with a single Wi-Fi function for the air conditioner) transmits the Media Access Control or Medium Access Control (MAC) address of the independent Wi-Fi component to the main board of the air conditioner through serial communication after powering, and obtains Devld of the main board of the air conditioner (for example, an identification code such as a device ID of the main board of the air conditioner).

After powering the voice board, the MAC address of the independent Wi-Fi component (namely the single Wi-Fi function component of the air conditioner) and Devld of the main board are obtained from the main board of the air conditioner through serial communication.

The independent Wi-Fi component is a Wi-Fi component for the air conditioner and server synchronization state function. The voice board also has a Wi-Fi function, which is used for connecting a router to access the server.

At step 2, the local area network is established. The relevant content is as follows.

The voice board Wi-Fi (namely the Wi-Fi component of the voice board) sends a broadcast packet (such as an ipresearch broadcast pack), a top layer of the broadcast packet carries a key selection, the pack (such as the broadcast packet) carries the MAC address of the independent Wi-Fi component of the air conditioner, pack data (such as broadcast data in the broadcast packet) is encrypted with a key which is obtained by a fixed algorithm using Devld.

The key selection on the top layer of the broadcast packet mainly means that different data types use different encryption modes, and the correspondence between the encryption mode (or data packaging mode) and the data type is specified in the agreement in advance. For example, the key selection on the top layer is to bring the corresponding encryption mode according to the data type, so that the receiver knows the decryption mode and the key.

The independent Wi-Fi component (namely the single Wi-Fi function component of the air conditioner) receives the broadcast packet, calculates the key by performing a fixed algorithm on Devld through a specified key selection mode, and decrypts the pack.

The MAC in the pack is compared with the MAC in the independent Wi-Fi component (namely the single Wi-Fi function component of the air conditioner). When the MAC in the pack is different from the MAC in the independent Wi-Fi component, the broadcast packet is discarded without any response. When the MAC in the pack is the same as the MAC in the independent Wi-Fi component, the IP of voice Wi-Fi is recorded, and the broadcast response packet (such as ripresearch packet) is returned.

For example, when the independent Wi-Fi component receives the broadcast packet of the voice Wi-Fi component, the IP of the voice Wi-Fi component is obtained by parsing. The IP address is an IP address assigned by the router when the device is connected with the router, and the MAC is a physical address of the device.

After the voice Wi-Fi component (namely the Wi-Fi component of the voice board) successfully decrypts the return packet (such as the ripresearch packet), a connection is established, and the IP (for example, the IP means an IP address of communication instead of a non-MAC address) of the independent Wi-Fi component (namely the single Wi-Fi function component of the air conditioner) is recorded.

For example, when the voice Wi-Fi component receives the data packet, the key will be used for parsing the data packet to obtain a parsed result. When the parsed result is garbled, the data packet will be discarded. When specific response content, such as "OK", is parsed, it means that the parsing is successful.

At step 3, the local area network is maintained and data is transmitted. The relevant content is as follows:
The voice Wi-Fi board periodically sends a heartbeat packet (such as heartbt), the independent Wi-Fi component receives the heartbeat packet and returns a heartbeat response packet (such as rheartbt), and when the voice Wi-Fi board does not receive a heartbeat packet response, step 2 is repeated.

The voice Wi-Fi component or the independent Wi-Fi component sends a data packet (such as a token packet), and the data packet (such as the token packet) contains a field name of data to be obtained, and the opposite end packages the corresponding data and returns the data response packet (such as an rtoken packet).

The voice Wi-Fi component or the independent Wi-Fi component sends the data change packet (such as a set packet) and packages the changed parameters to the opposite end. The opposite end returns the data change response packet (such as an rset packet). When the sender does not receive data, a specified count is re-sent.

Since the processing and functions implemented by the air conditioner of the present embodiment basically correspond to the foregoing embodiments, principles, and examples of the voice board shown in Fig. 5 and the detection board shown in Fig. 10, or the foregoing embodiments, principles, or examples of the voice board shown in Fig. 5 and the detection board shown in Fig. 10, the description of the present embodiment is not exhaustive, reference is made to relevant descriptions in the foregoing embodiments, and the description will not be repeated here.

After a large number of tests and verifications, by using the technical solution of the present invention, through establishing a local area network between the voice Wi-Fi component and the Wi-Fi component dedicated to the air conditioner, different parameters required for connecting different servers is also added to the communication method, and the flexibility is positive.

In some embodiments of the present invention, a storage medium corresponding to the communication method of an air conditioner is also provided. The storage medium stores multiple instructions. The multiple instructions are loaded by a processor to perform the communication method of the voice board described above, or loaded by the processor to perform the communication method of the detection board described above.

Since the processing and functions implemented by the storage medium of the present embodiment basically correspond to the foregoing embodiments, principles, and examples of the communication method of a voice board shown in Fig. 1 to Fig. 4 or the communication method of a detection board shown in Fig. 6 to Fig. 9, the description of the present embodiment is not exhaustive, reference is made to relevant descriptions in the foregoing embodiments, and the description will not be repeated here.

After a large number of tests and verifications, by using the technical solution of the present invention, through establishing a local area network between the voice Wi-Fi component and the Wi-Fi component dedicated to the air conditioner, when matching the voice components of different manufacturers, as long as voice components of different manufacturers are implemented according to the communication method, it is compatible, and the compatibility is positive.

In some embodiments of the present invention, an air conditioner corresponding to the communication method of the voice board and the detection board, or the voice board, or the detection board is also provided. The air conditioner includes a processor for executing multiple instructions; and a memory for storing multiple instructions. The multiple instructions are stored by the memory and are loaded by the processor to perform the communication method of a voice board and a detection board, a voice board, or a detection board described above.

Since the processing and functions implemented by the air conditioner of the present embodiment basically correspond to the foregoing embodiments, principles, and examples of the communication method of a voice board shown in Fig. 1 to Fig. 4 or the communication method of a detection board shown in Fig. 6 to Fig. 9, the description of the present embodiment is not exhaustive, reference is made to relevant descriptions in the foregoing embodiments, and the description will not be repeated here.

After a large number of tests and verifications, by using the technical solution of the present invention, through establishing the local area network between the voice Wi-Fi component and the Wi-Fi component dedicated to the air conditioner, different parameters required for connecting different servers are also added to the communication method, and the flexibility is positive.

In summary, it is easy for those skilled in the art to understand that the above-mentioned advantageous modes are freely combined and superimposed on the premise of no conflict.

## Claims

1. A communication method of a voice board, a serial port of a main board of an air conditioner is respectively connected with an independent communication component of a detection board adapted to achieve a communication function of the air conditioner, and connected with a voice communication component of the voice board adapted to achieve an online voice function of the air conditioner, the communication method of the voice board comprising:
powering (S110) the voice communication component to obtain address information of the independent communication component, and identity information of the main board;
sending (S120) a broadcast packet to the independent communication component based on the address information and the identity information, and then receiving a broadcast response packet returned by the independent communication component based on the broadcast packet; and
parsing (S130) the broadcast response packet, and when the parsing is successful, establishing a communication connection between the voice communication component and the independent communication component, so as to establish a local area network between the voice communication component and the independent communication component;
**characterized in that** after establishing the communication connection between the voice communication component and the independent communication component or determining that the local area network between the voice communication component and the independent communication component maintains communication, the method further comprises:
controlling (S310) the voice communication component to send a data packet to the independent communication component, the data packet carrying a first field name of first data to be acquired by the voice communication component; determining (S320) whether the voice communication component receives a data response packet returned by the independent communication component, the data response packet carrying first data to be acquired by the voice communication component; when the voice communication component receives the data response packet returned by the independent communication component, determining (S330) that the data transfer between the voice communication component and the independent communication component through the local area network is normal, and when the voice communication component does not receive the data response packet returned by the independent communication component, re-sending the data packet to the independent communication component according to a first set count.

2. The communication method of the voice board as claimed in claim 1, wherein
after the parsing is successful, the method further comprises: recording a communication Internet Protocol, IP, address of the independent communication component which establishes a communication connection with the voice communication component.

3. The communication method of the voice board as claimed in claim 1, wherein
after establishing the local area network between the voice communication component and the independent communication component, the method further comprises: controlling (S210) the voice communication component to send a heartbeat packet to the independent communication component according to a set period; determining (S220) whether the voice communication component receives a heartbeat response packet returned by the independent communication component based on the heartbeat packet; and when the voice communication component receives the heartbeat response packet, determining (S230) that the local area network between the voice communication component and the independent communication component maintains communication, and when the voice communication component does not receive the heartbeat response packet, re-establishing a local area network between the voice communication component and the independent communication component.

4. The communication method of the voice board as claimed in claim 1, wherein after establishing the communication connection between the voice communication component and the independent communication component or determining that the local area network between the voice communication component and the independent communication component maintains communication, the method further comprises:
controlling (S410) the voice communication component to send a data change packet to the independent communication component, the data change packet carrying a changed first parameter of the voice communication component; determining (S420) whether the voice communication component receives a data change response packet returned by the independent communication component, the data change response packet carrying change information of the first parameter that has been synchronously changed by the voice communication component; and when the voice communication component receives the data response packet returned by the independent communication component, determining (S430) that the data transfer between the voice communication component and the independent communication component through the local area network is normal, and when the voice communication component does not receive the data response packet returned by the independent communication component, re-sending the data change packet to the independent communication component according to a second set count.

5. The communication method of the voice board as claimed in claim 1, wherein the communication method meets at least one of following conditions:
the independent communication component or the voice communication component comprise one of a Wi-Fi component, a Bluetooth component, a Near Field Communication, NFC, component, and a Narrow Band Internet of Things, NB-IoT, component;
the address information comprises one of a Media Access Control, MAC, address and an IP address;
the identity information comprises one of a device ID and a device identification code;
a top layer of the broadcast packet carries a key selection mode; and the broadcast packet carries address information of the independent communication component, and the address information is encrypted with a key based on the identity information.

6. A communication apparatus of a voice board, a serial port of a main board of an air conditioner is respectively connected with an independent communication component of a detection board adapted to achieve a communication function of the air conditioner, and connected with a voice communication component of the voice board adapted to achieve an online voice function of the air conditioner, the communication apparatus of the voice board comprising:
a first synchronization element (102), configured to power the voice communication component to obtain address information of the independent communication component, and identity information of the main board; and
a first communication element (104), configured to send a broadcast packet to the independent communication component based on the address information and the identity information, and then receive a broadcast response packet returned by the independent communication component based on the broadcast packet,
wherein the first communication element (104) is further configured to parse the broadcast response packet, and establish, when the parsing is successful, a communication connection between the voice communication component and the independent communication component, so as to establish a local area network between the voice communication component and the independent communication component;
**characterized in that** after the first communication element (104) establishes the communication connection between the voice communication component and the independent communication component or determines that the local area network between the voice communication component and the independent communication component maintains communication;
the first communication element (104) is further configured to control the voice communication component to send a data packet to the independent communication component, the data packet carrying a first field name of first data to be acquired by the voice communication component; the first communication element (104) is further configured to determine whether the voice communication component receives a data response packet returned by the independent communication component, the data response packet carrying first data to be acquired by the voice communication component; the first communication element (104) is further configured to determine, when the voice communication component receives the data response packet returned by the independent communication component, that the data transfer between the voice communication component and the independent communication component through the local area network is normal, and re-send, when the voice communication component does not receive the data response packet returned by the independent communication component, the data packet to the independent communication component according to a first set count.

7. The communication apparatus of the voice board as claimed in claim 6, wherein
after the parsing of the first communication element (104) is successful, the first communication element (104) is further configured to record a communication IP address of the independent communication component that establishes a communication connection with the voice communication component;

8. The communication apparatus of the voice board as claimed in claim 6, wherein
after the first communication element (104) establishes the local area network between the voice communication component and the independent communication component, the first communication element (104) is further configured to control the voice communication component to send a heartbeat packet to the independent communication component according to a set period; the first communication element (104) is further configured to determine whether the voice communication component receives a heartbeat response packet returned by the independent communication component based on the heartbeat packet; and the first communication element (104) is further configured to determine, when the voice communication component receives the heartbeat response packet, that the local area network between the voice communication component and the independent communication component maintains communication, and re-establish, when the voice communication component does not receive the heartbeat response packet, a local area network between the voice communication component and the independent communication component.

9. The communication apparatus of the voice board as claimed in claim 6, wherein after the first communication element (104) establishes the communication connection between the voice communication component and the independent communication component or determines that the local area network between the voice communication component and the independent communication component maintains communication;
the first communication element (104) is further configured to control the voice communication component to send a data change packet to the independent communication component, the data change packet carrying a changed first parameter of the voice communication component; the first communication element (104) is further configured to determine whether the voice communication component receives a data change response packet returned by the independent communication component, the data change response packet carrying change information of the first parameter that has been synchronously changed by the voice communication component; and the first communication element (104) is further configured to determine, when the voice communication component receives the data response packet returned by the independent communication component, that the data transfer between the voice communication component and the independent communication component through the local area network is normal, and re-send, when the voice communication component does not receive the data response packet returned by the independent communication component, the data change packet to the independent communication component according to a second set count.

10. The communication apparatus of the voice board as claimed in claim 6, wherein the communication apparatus meets at least one of following conditions:
the independent communication component or the voice communication component comprise one of a Wi-Fi component, a Bluetooth component, an NFC component, and an NB-IoT component;
the address information comprises one of a MAC address and an IP address;
the identity information comprises one of a device ID and a device identification code;
a top layer of the broadcast packet carries a key selection mode; and the broadcast packet carries address information of the independent communication component, and the address information is encrypted with a key based on the identity information.

11. A voice board, comprising: the communication apparatus of the voice board as claimed in any one of claims 6 to 10.

12. An air conditioner, adapted to achieve an online voice function through the voice board as claimed in claim 11,

13. A storage medium, wherein the storage medium is configured to store a plurality of instructions, the plurality of instructions are loaded by a processor to perform the communication method of the voice board as claimed in any one of claims 1 to 5.

## Patentansprüche

1. Kommunikationsverfahren einer Sprachplatine, wobei ein serieller Anschluss einer Hauptplatine einer Klimaanlage jeweils mit einer unabhängigen Kommunikationskomponente einer Detektionsplatine verbunden ist, die dazu angepasst ist, eine Kommunikationsfunktion der Klimaanlage zu erreichen, und mit einer Sprachkommunikationskomponente der Sprachplatine verbunden ist, die dazu angepasst ist, eine Online-Sprachfunktion der Klimaanlage zu erreichen, wobei das Kommunikationsverfahren der Sprachplatine umfasst:
Einschalten (S110) der Sprachkommunikationskomponente, um Adressinformationen der unabhängigen Kommunikationskomponente und Identitätsinformationen der Hauptplatine zu erhalten;
Senden (S120) eines Rundsendepakets an die unabhängige Kommunikationskomponente basierend auf den Adressinformationen und den Identitätsinformationen, und dann Empfangen eines Rundsende-Antwortpakets, das von der unabhängigen Kommunikationskomponente basierend auf dem Rundsendepaket zurückgesendet wird; und
Analysieren (S130) des Rundsende-Antwortpakets und, wenn das Analysieren erfolgreich ist, Herstellen einer Kommunikationsverbindung zwischen der Sprachkommunikationskomponente und der unabhängigen Kommunikationskomponente, um ein lokales Netzwerk zwischen der Sprachkommunikationskomponente und der unabhängigen Kommunikationskomponente herzustellen;
**dadurch gekennzeichnet, dass** nach dem Herstellen der Kommunikationsverbindung zwischen der Sprachkommunikationskomponente und der unabhängigen Kommunikationskomponente oder dem Bestimmen, dass das lokale Netzwerk zwischen der Sprachkommunikationskomponente und der unabhängigen Kommunikationskomponente die Kommunikation aufrechterhält, das Verfahren ferner umfasst:
Steuern (S310) der Sprachkommunikationskomponente, um ein Datenpaket an die unabhängige Kommunikationskomponente zu senden, wobei das Datenpaket einen ersten Feldnamen von ersten Daten trägt, die von der Sprachkommunikationskomponente erfasst werden sollen; Bestimmen (S320), ob die Sprachkommunikationskomponente ein Datenantwortpaket empfängt, das von der unabhängigen Kommunikationskomponente zurückgesendet wird, wobei das Datenantwortpaket erste Daten trägt, die von der Sprachkommunikationskomponente erfasst werden sollen; wenn die Sprachkommunikationskomponente das von der unabhängigen Kommunikationskomponente zurückgesendete Datenantwortpaket empfängt, Bestimmen (S330), dass die Datenübertragung zwischen der Sprachkommunikationskomponente und der unabhängigen Kommunikationskomponente über das lokale Netzwerk normal ist, und wenn die Sprachkommunikationskomponente das von der unabhängigen Kommunikationskomponente zurückgesendete Datenantwortpaket nicht empfängt, erneutes Senden des Datenpakets an die unabhängige Kommunikationskomponente nach einem ersten eingestellten Zählwert.

2. Kommunikationsverfahren der Sprachplatine nach Anspruch 1, wobei das Verfahren nach erfolgreichem Analysieren ferner umfasst: Aufzeichnen einer Kommunikations-Internetprotokoll (IP)-Adresse der unabhängigen Kommunikationskomponente, die eine Kommunikationsverbindung mit der Sprachkommunikationskomponente herstellt.

3. Kommunikationsverfahren der Sprachplatine nach Anspruch 1, wobei nach dem Herstellen des lokalen Netzwerks zwischen der Sprachkommunikationskomponente und der unabhängigen Kommunikationskomponente das Verfahren ferner umfasst: Steuern (S210) der Sprachkommunikationskomponente zum Senden eines Heartbeat-Pakets an die unabhängige Kommunikationskomponente nach einer eingestellten Periode; Bestimmen (S220), ob die Sprachkommunikationskomponente ein Heartbeat-Antwortpaket empfängt, das von der unabhängigen Kommunikationskomponente basierend auf dem Heartbeat-Paket zurückgesendet wird und wenn die Sprachkommunikationskomponente das Heartbeat-Antwortpaket empfängt, Bestimmen (S230), dass das lokale Netzwerk zwischen der Sprachkommunikationskomponente und der unabhängigen Kommunikationskomponente die Kommunikation aufrechterhält, und wenn die Sprachkommunikationskomponente das Heartbeat-Antwortpaket nicht empfängt, Wiederherstellen eines lokalen Netzwerks zwischen der Sprachkommunikationskomponente und der unabhängigen Kommunikationskomponente.

4. Kommunikationsverfahren der Sprachplatine nach Anspruch 1, wobei nach dem Herstellen der Kommunikationsverbindung zwischen der Sprachkommunikationskomponente und der unabhängigen Kommunikationskomponente oder dem Bestimmen, dass das lokale Netzwerk zwischen der Sprachkommunikationskomponente und der unabhängigen Kommunikationskomponente die Kommunikation aufrechterhält, das Verfahren ferner umfasst:
Steuern (S410) der Sprachkommunikationskomponente, um ein Datenänderungspaket an die unabhängige Kommunikationskomponente zu senden, wobei das Datenänderungspaket einen geänderten ersten Parameter der Sprachkommunikationskomponente trägt; Bestimmen (S420), ob die Sprachkommunikationskomponente ein Datenänderungs-Antwortpaket empfängt, das von der unabhängigen Kommunikationskomponente zurückgesendet wird, wobei das Datenänderungs-Antwortpaket Änderungsinformationen des ersten Parameters trägt, der von der Sprachkommunikationskomponente synchron geändert worden ist; und wenn die Sprachkommunikationskomponente das von der unabhängigen Kommunikationskomponente zurückgesendete Datenantwortpaket empfängt, Bestimmen (S430), dass die Datenübertragung zwischen der Sprachkommunikationskomponente und der unabhängigen Kommunikationskomponente über das lokale Netzwerk normal ist, und wenn die Sprachkommunikationskomponente das von der unabhängigen Kommunikationskomponente zurückgesendete Datenantwortpaket nicht empfängt, erneutes Senden des Datenänderungspakets an die unabhängige Kommunikationskomponente nach einem zweiten eingestellten Zählwert.

5. Kommunikationsverfahren der Sprachplatine nach Anspruch 1, wobei das Kommunikationsverfahren wenigstens eine der folgenden Bedingungen erfüllt:
die unabhängige Kommunikationskomponente oder die Sprachkommunikationskomponente umfasst eine Wi-Fi-Komponente, eine Bluetooth-Komponente, eine Near Field Communication (NFC)-Komponente oder eine Narrow Band Internet of Things (NB-IoT)-Komponente;
die Adressinformationen umfassen entweder eine Media Access Control (MAC)-Adresse oder eine IP-Adresse;
die Identitätsinformationen umfassen eine Geräte-ID oder einen Geräteidentifikationscode;
eine oberste Schicht des Rundsendepakets trägt einen Schlüsselauswahlmodus; und das Rundsendepaket trägt Adressinformationen der unabhängigen Kommunikationskomponente, und die Adressinformationen werden mit einem auf den Identitätsinformationen basierenden Schlüssel verschlüsselt.

6. Kommunikationsvorrichtung einer Sprachplatine, wobei ein serieller Anschluss einer Hauptplatine einer Klimaanlage jeweils mit einer unabhängigen Kommunikationskomponente einer Detektionsplatine verbunden ist, die angepasst ist, eine Kommunikationsfunktion der Klimaanlage zu erreichen, und mit einer Sprachkommunikationskomponente der Sprachplatine verbunden ist, die geeignet ist, eine Online-Sprachfunktion der Klimaanlage zu erreichen, wobei die Kommunikationsvorrichtung der Sprachplatine umfasst:
ein erstes Synchronisationselement (102), das so eingerichtet ist, dass es die Sprachkommunikationskomponente mit Energie versorgt, um Adressinformationen der unabhängigen Kommunikationskomponente und Identitätsinformationen der Hauptplatine zu erhalten; und
ein erstes Kommunikationselement (104), das so eingerichtet ist, dass es basierend auf den Adressinformationen und den Identitätsinformationen ein Rundsendepaket an die unabhängige Kommunikationskomponente sendet und dann ein Rundsende-Antwortpaket empfängt, das von der unabhängigen Kommunikationskomponente basierend auf dem Rundsendepakets zurückgesendet wird,
wobei das erste Kommunikationselement (104) ferner so eingerichtet ist, dass es das Rundsende-Antwortpaket analysiert und, wenn das Analysieren erfolgreich ist, eine Kommunikationsverbindung zwischen der Sprachkommunikationskomponente und der unabhängigen Kommunikationskomponente herstellt, um ein lokales Netzwerk zwischen der Sprachkommunikationskomponente und der unabhängigen Kommunikationskomponente herzustellen;
**dadurch gekennzeichnet, dass**, nachdem das erste Kommunikationselement (104) die Kommunikationsverbindung zwischen der Sprachkommunikationskomponente und der unabhängigen Kommunikationskomponente herstellt oder bestimmt, dass das lokale Netzwerk zwischen der Sprachkommunikationskomponente und der unabhängigen Kommunikationskomponente die Kommunikation aufrechterhält;
das erste Kommunikationselement (104) ferner so eingerichtet ist, dass es die Sprachkommunikationskomponente so steuert, dass sie ein Datenpaket an die unabhängige Kommunikationskomponente sendet, wobei das Datenpaket einen ersten Feldnamen von ersten Daten trägt, die von der Sprachkommunikationskomponente erfasst werden sollen; das erste Kommunikationselement (104) ferner so eingerichtet ist, dass es bestimmt, ob die Sprachkommunikationskomponente ein Datenantwortpaket empfängt, das von der unabhängigen Kommunikationskomponente zurückgesendet wird, wobei das Datenantwortpaket erste Daten trägt, die von der Sprachkommunikationskomponente erfasst werden sollen; das erste Kommunikationselement (104) ferner so eingerichtet ist, dass es, wenn die Sprachkommunikationskomponente das von der unabhängigen Kommunikationskomponente zurückgesendete Datenantwortpaket empfängt, bestimmt, dass die Datenübertragung zwischen der Sprachkommunikationskomponente und der unabhängigen Kommunikationskomponente über das lokale Netz normal ist, und, wenn die Sprachkommunikationskomponente das von der unabhängigen Kommunikationskomponente zurückgesendete Datenantwortpaket nicht empfängt, das Datenpaket nach einem ersten eingestellten Zählwert erneut an die unabhängige Kommunikationskomponente sendet.

7. Kommunikationsvorrichtung der Sprachplatine nach Anspruch 6, wobei
nachdem das Analysieren des ersten Kommunikationselements (104) erfolgreich war, das erste Kommunikationselement (104) ferner so eingerichtet ist, dass es eine Kommunikations-IP-Adresse der unabhängigen Kommunikationskomponente aufzeichnet, die eine Kommunikationsverbindung mit der Sprachkommunikationskomponente herstellt.

8. Kommunikationsvorrichtung der Sprachplatine nach Anspruch 6, wobei
nachdem das erste Kommunikationselement (104) das lokale Netzwerk zwischen der Sprachkommunikationskomponente und der unabhängigen Kommunikationskomponente hergestellt hat, das erste Kommunikationselement (104) ferner so eingerichtet ist, dass es die Sprachkommunikationskomponente so steuert, dass sie ein Heartbeat-Paket an die unabhängige Kommunikationskomponente nach einer eingestellten Periode sendet; das erste Kommunikationselement (104) ferner so eingerichtet ist, dass es bestimmt, ob die Sprachkommunikationskomponente ein Heartbeat-Antwortpaket empfängt, das von der unabhängigen Kommunikationskomponente basierend auf dem Heartbeat-Paket zurückgesendet wird; und das erste Kommunikationselement (104) ferner so eingerichtet ist, dass es, wenn die Sprachkommunikationskomponente das Heartbeat-Antwortpaket empfängt, bestimmt, dass das lokale Netz zwischen der Sprachkommunikationskomponente und der unabhängigen Kommunikationskomponente die Kommunikation aufrechterhält, und, wenn die Sprachkommunikationskomponente das Heartbeat-Antwortpaket nicht empfängt, ein lokales Netzwerk zwischen der Sprachkommunikationskomponente und der unabhängigen Kommunikationskomponente wiederherstellt.

9. Kommunikationsvorrichtung der Sprachplatine nach Anspruch 6, wobei das erste Kommunikationselement (104) die Kommunikationsverbindung zwischen der Sprachkommunikationskomponente und der unabhängigen Kommunikationskomponente herstellt oder bestimmt, dass das lokale Netzwerk zwischen der Sprachkommunikationskomponente und der unabhängigen Kommunikationskomponente die Kommunikation aufrechterhält;
das erste Kommunikationselement (104) ferner so eingerichtet ist, dass es die Sprachkommunikationskomponente so steuert, dass sie ein Datenänderungspaket an die unabhängige Kommunikationskomponente sendet, wobei das Datenänderungspaket einen geänderten ersten Parameter der Sprachkommunikationskomponente trägt; das erste Kommunikationselement (104) ferner so eingerichtet ist, dass es bestimmt, ob die Sprachkommunikationskomponente ein von der unabhängigen Kommunikationskomponente zurückgesendetes Datenänderungs-Antwortpaket empfängt, wobei das Datenänderungs-Antwortpaket Änderungsinformationen des ersten Parameters trägt, der von der Sprachkommunikationskomponente synchron geändert worden ist; und das erste Kommunikationselement (104) ferner so eingerichtet ist, dass es, wenn die Sprachkommunikationskomponente das von der unabhängigen Kommunikationskomponente zurückgesendete Datenantwortpaket empfängt, bestimmt, dass die Datenübertragung zwischen der Sprachkommunikationskomponente und der unabhängigen Kommunikationskomponente über das lokale Netzwerk normal ist, und, wenn die Sprachkommunikationskomponente das von der unabhängigen Kommunikationskomponente zurückgesendete Datenantwortpaket nicht empfängt, das Datenänderungspaket nach einem zweiten eingestellten Zählwert erneut an die unabhängige Kommunikationskomponente sendet.

10. Kommunikationsvorrichtung der Sprachplatine nach Anspruch 6, wobei die Kommunikationsvorrichtung wenigstens eine der folgenden Bedingungen erfüllt:
die unabhängige Kommunikationskomponente oder die Sprachkommunikationskomponente umfasst eine Wi-Fi-Komponente, eine Bluetooth-Komponente, eine NFC-Komponente oder eine NB-IoT-Komponente;
die Adressinformationen umfassen eine MAC-Adresse oder eine IP-Adresse;
die Identitätsinformationen umfassen eine Geräte-ID oder einen Geräteidentifikationscode;
eine oberste Schicht des Rundsendepakets trägt einen Schlüsselauswahlmodus; und das Rundsendepaket trägt Adressinformationen der unabhängigen Kommunikationskomponente, und die Adressinformationen werden mit einem auf den Identitätsinformationen basierenden Schlüssel verschlüsselt.

11. Sprachplatine, die umfasst: die Kommunikationsvorrichtung der Sprachplatine nach einem der Ansprüche 6 bis 10.

12. Klimaanlage, die dazu angepasst ist, eine Online-Sprachfunktion durch die Sprachplatine nach Anspruch 11 zu erreichen,

13. Speichermedium, wobei das Speichermedium so eingerichtet ist, dass es mehrere Befehle speichert, wobei die mehreren Befehle von einem Prozessor geladen werden, um das Kommunikationsverfahren der Sprachplatine nach einem der Ansprüche 1 bis 5 durchzuführen.

## Revendications

1. Procédé de communication d'une carte vocale, un port série d'une carte mère d'un climatiseur étant connecté respectivement à un composant de communication indépendant d'une carte de détection, adapté pour réaliser une fonction de communication du climatiseur, et étant connecté à un composant de communication vocale de la carte vocale, adapté pour réaliser une fonction de voix en ligne du climatiseur, le procédé de communication de la carte vocale comprenant les étapes suivantes :
alimenter (S 110) le composant de communication vocale afin d'obtenir des informations d'adresse du composant de communication indépendant, et des informations d'identité de la carte mère ;
envoyer (S120) un paquet de diffusion générale au composant de communication indépendant, sur la base des informations d'adresse et des informations d'identité, et recevoir ensuite un paquet réponse de diffusion générale renvoyé par le composant de communication indépendant, sur la base du paquet de diffusion générale ; et
analyser (S130) le paquet réponse de diffusion générale, et lorsque l'analyse est réussie, établir une connexion de communication entre le composant de communication vocale et le composant de communication indépendant, afin d'établir un réseau local entre le composant de communication vocale et le composant de communication indépendant ;
**caractérisé en ce que**, après avoir établi la connexion de communication entre le composant de communication vocale et le composant de communication indépendant, ou après avoir déterminé que le réseau local entre le composant de communication vocale et le composant de communication indépendant maintient une communication, le procédé comprend en outre les étapes suivantes :
commander (S310) le composant de communication vocale afin d'envoyer un paquet de données au composant de communication indépendant, le paquet de données portant un premier nom de champ de premières données à acquérir par le composant de communication vocale ; déterminer (S320) si le composant de communication vocale reçoit un paquet réponse de données renvoyé par le composant de communication indépendant, le paquet réponse de données portant des premières données à acquérir par le composant de communication vocale ; lorsque le composant de communication vocale reçoit le paquet réponse de données renvoyé par le composant de communication indépendant, déterminer (S330) que le transfert de données entre le composant de communication vocale et le composant de communication indépendant à travers le réseau local, est normal, et lorsque le composant de communication vocale ne reçoit pas le paquet réponse de données renvoyé par le composant de communication indépendant, renvoyer le paquet de données au composant de communication indépendant selon un premier compte réglé.

2. Procédé de communication de la carte vocale selon la revendication 1, dans lequel
après une analyse réussie, le procédé comprend en outre l'étape suivante : enregistrer une adresse de protocole Internet, IP, de communication du composant de communication indépendant, qui établit une connexion de communication avec le composant de communication vocale.

3. Procédé de communication de la carte vocale selon la revendication 1, dans lequel
après avoir établi le réseau local entre le composant de communication vocale et le composant de communication indépendant, le procédé comprend en outre les étapes suivantes : commander (S210) le composant de communication vocale afin d'envoyer un paquet battement de coeur au composant de communication indépendant selon une période réglée ; déterminer (S220) si le composant de communication vocale reçoit un paquet réponse battement de coeur renvoyé par le composant de communication indépendant, sur la base du paquet battement de coeur ; et lorsque le composant de communication vocale reçoit le paquet réponse battement de coeur, déterminer (S230) que le réseau local entre le composant de communication vocale et le composant de communication indépendant, maintient une communication, et lorsque le composant de communication vocale ne reçoit pas le paquet réponse battement de coeur, rétablir un réseau local entre le composant de communication vocale et le composant de communication indépendant.

4. Procédé de communication de la carte vocale selon la revendication 1, dans lequel, après avoir établi la connexion de communication entre le composant de communication vocale et le composant de communication indépendant, ou après avoir déterminé que le réseau local entre le composant de communication vocale et le composant de communication indépendant, maintient une communication, le procédé comprend en outre les étapes suivantes :
commander (S410) le composant de communication vocale afin d'envoyer un paquet modification de données au composant de communication indépendant, le paquet modification de données portant un premier paramètre modifié du composant de communication vocale ; déterminer (S420) si le composant de communication vocale reçoit un paquet réponse modification de données renvoyé par le composant de communication indépendant, le paquet réponse modification de données portant des informations de modification du premier paramètre qui a été modifié de façon synchrone par le composant de communication vocale ; et, lorsque le composant de communication vocale reçoit le paquet réponse de données renvoyé par le composant de communication indépendant, déterminer (S430) que le transfert de données entre le composant de communication vocale et le composant de communication indépendant à travers le réseau local, est normal, et lorsque le composant de communication vocale ne reçoit pas le paquet réponse de données renvoyé par le composant de communication indépendant, renvoyer le paquet modification de données au composant de communication indépendant selon un second compte réglé.

5. Procédé de communication de la carte vocale selon la revendication 1, dans lequel le procédé de communication remplit l'une au moins des conditions suivantes :
le composant de communication indépendant ou le composant de communication vocale, comprend l'un d'un composant WiFi, d'un composant Bluetooth, d'un composant de communication en champ proche, NFC, et d'un composant Internet des objets à bande étroite, NB-IoT ;
les informations d'adresse comprennent l'une d'une adresse de contrôle d'accès au support, MAC, et d'une adresse IP ;
les informations d'identité comprennent celles d'un ID de dispositif, et d'un code d'identification de dispositif ;
une couche supérieure du paquet de diffusion générale porte un mode de sélection de clé ; et le paquet de diffusion générale porte des informations d'adresse du composant de communication indépendant, et les informations d'adresse sont chiffrées avec une clé, sur la base des informations d'identité.

6. Appareil de communication d'une carte vocale, un port série d'une carte mère d'un climatiseur étant connecté respectivement à un composant de communication indépendant d'une carte de détection, adapté pour réaliser une fonction de communication du climatiseur, et étant connecté à un composant de communication vocale de la carte vocale, adapté pour réaliser une fonction de voix en ligne du climatiseur, l'appareil de communication de la carte vocale comprenant :
un premier élément de synchronisation (102), configuré pour alimenter le composant de communication vocale afin d'obtenir des informations d'adresse du composant de communication indépendant, et des informations d'identité de la carte mère ; et
un premier élément de communication (104), configuré pour envoyer un paquet de diffusion générale au composant de communication indépendant, sur la base des informations d'adresse et des informations d'identité, et pour recevoir ensuite un paquet réponse de diffusion générale renvoyé par le composant de communication indépendant, sur la base du paquet de diffusion générale ;
dans lequel le premier élément de communication (104) est configuré en outre pour analyser le paquet réponse de diffusion générale, et pour établir, lorsque l'analyse est réussie, une connexion de communication entre le composant de communication vocale et le composant de communication indépendant, afin d'établir un réseau local entre le composant de communication vocale et le composant de communication indépendant ;
**caractérisé en ce que**, une fois que le premier élément de communication (104) a établi la connexion de communication entre le composant de communication vocale et le composant de communication indépendant, ou a déterminé que le réseau local entre le composant de communication vocale et le composant de communication indépendant, maintient une communication ;
le premier élément de communication (104) est configuré en outre pour commander le composant de communication vocale afin d'envoyer un paquet de données au composant de communication indépendant, le paquet de données portant un premier nom de champ de premières données à acquérir par le composant de communication vocale ; le premier élément de communication (104) est configuré en outre pour déterminer si le composant de communication vocale reçoit un paquet réponse de données renvoyé par le composant de communication indépendant, le paquet réponse de données portant des premières données à acquérir par le composant de communication vocale ; le premier élément de communication (104) est configuré en outre pour déterminer, lorsque le composant de communication vocale reçoit le paquet réponse de données renvoyé par le composant de communication indépendant, que le transfert de données entre le composant de communication vocale et le composant de communication indépendant à travers le réseau local, est normal, et pour renvoyer, lorsque le composant de communication vocale ne reçoit pas le paquet réponse de données renvoyé par le composant de communication indépendant, le paquet de données au composant de communication indépendant selon un second compte réglé.

7. Appareil de communication de la carte vocale selon la revendication 6, dans lequel
après la réussite de l'analyse du premier élément de communication (104), le premier élément de communication (104) est configuré en outre pour enregistrer une adresse IP de communication du composant de communication indépendant qui établit une connexion de communication avec le composant de communication vocale.

8. Appareil de communication de la carte vocale selon la revendication 6, dans lequel
une fois que le premier élément de communication (104) a établi le réseau local entre le composant de communication vocale et le composant de communication indépendant, le premier élément de communication (104) est configuré en outre pour commander le composant de communication vocale afin d'envoyer un paquet battement de coeur au composant de communication indépendant selon une période réglée ; le premier élément de communication (104) est configuré en outre pour déterminer si le composant de communication vocale reçoit un paquet réponse battement de coeur renvoyé par le composant de communication indépendant sur la base du paquet battement de coeur, et le premier élément de communication (104) est configuré en outre pour déterminer, lorsque le composant de communication vocale reçoit le paquet réponse battement de coeur, que le réseau local entre le composant de communication vocale et le composant de communication indépendant, maintient une communication, et pour rétablir, lorsque le composant de communication vocale ne reçoit pas le paquet réponse battement de coeur, un réseau local entre le composant de communication vocale et le composant de communication indépendant.

9. Appareil de communication de la carte vocale selon la revendication 6, dans lequel, une fois que le premier élément de communication (104) a établi la connexion de communication entre le composant de communication vocale et le composant de communication indépendant, ou a déterminé que le réseau local entre le composant de communication vocale et le composant de communication indépendant, maintient une communication :
le premier élément de communication (104) est configuré en outre pour commander le composant de communication vocale afin d'envoyer un paquet modification de données au composant de communication indépendant, le paquet modification de données portant un premier paramètre modifié du composant de communication vocale ; le premier élément de communication (104) est configuré en outre pour déterminer si le composant de communication vocale reçoit un paquet réponse modification de données renvoyé par le composant de communication indépendant, le paquet réponse modification de données portant des informations de modification du premier paramètre qui a été modifié de façon synchrone par le composant de communication vocale ; et le premier élément de communication (104) est configuré en outre pour déterminer, lorsque le composant de communication vocale reçoit le paquet réponse de données renvoyé par le composant de communication indépendant, que le transfert de données entre le composant de communication vocale et le composant de communication indépendant à travers le réseau local, est normal, et pour renvoyer, lorsque le composant de communication vocale ne reçoit pas le paquet réponse de données renvoyé par le composant de communication indépendant, le paquet modification de données au composant de communication indépendant selon un second compte réglé.

10. Appareil de communication de la carte vocale selon la revendication 6, dans lequel l'appareil de communication remplit l'une au moins des conditions suivantes :
le composant de communication indépendant ou le composant de communication vocale, comprend l'un d'un composant WiFi, d'un composant Bluetooth, d'un composant NFC, et d'un composant NB-IoT ;
les informations d'adresse comprennent l'une d'une adresse MAC, et d'une adresse IP ;
les informations d'identité comprennent celles d'un ID de dispositif, et d'un code d'identification de dispositif ;
une couche supérieure du paquet de diffusion générale porte un mode de sélection de clé ; et le paquet de diffusion générale porte des informations d'adresse du composant de communication indépendant, et les informations d'adresse sont chiffrées avec une clé sur la base des informations d'identité.

11. Carte vocale, comprenant : l'appareil de communication de la carte vocale selon l'une quelconque des revendications 6 à 10.

12. Climatiseur, adapté pour réaliser une fonction de voix en ligne par l'intermédiaire de la carte vocale selon la revendication 11.

13. Support de stockage, dans lequel le support de stockage est configuré pour stocker une pluralité d'instructions, la pluralité d'instructions étant chargées par un processeur pour exécuter le procédé de communication de la carte vocale, selon l'une quelconque des revendications 1 à 5.
